# FASCICULE DE BREVET EUROPEEN

(11) **EP 3 206 968 B1**
(45) Date de publication et mention de la délivrance du brevet: **15.08.2018**
(21) Numéro de dépôt: 15784619.7
(22) Date de dépôt: 16.10.2015
(51) Int. Cl.: B65D 83/48

(54) **DISPOSITIF DE DISTRIBUTION D'UN PRODUIT COSMÉTIQUE SOUS FORME AÉROSOL, ENSEMBLE ET PROCÉDÉ ASSOCIÉS**
VORRICHTUNG ZUR AUSGABE EINES KOSMETISCHEN PRODUKTES IN AEROSOLFORM, ZUGEHÖRIGE ANORDNUNG UND VERFAHREN
DEVICE FOR DISPENSING A COSMETIC PRODUCT IN AEROSOL FORM, ASSOCIATED ASSEMBLY AND METHOD

(30) Priorité: 17.10.2014 FR 1460034
(43) Date de publication de la demande: 23.08.2017
(73) Titulaire: L'Oréal, 75008 Paris (FR)
(72) Inventeur: RIVAL, François, F-93588 Saint-Ouen (FR); GAUDILLOT, Jeanne, F-93588 Saint-Ouen (FR); AUBRET, Kerem, F-93588 Saint-Ouen (FR); JAUNET, Clément, F-93588 Saint-Ouen (FR); GOUNON, Yann, F-93588 Saint-Ouen (FR)
(74) Mandataire: Lavoix
(86) Numéro de dépôt international: PCT/EP2015/074044
(87) Numéro de publication internationale: WO 2016/059226

(56) Documents cités:
- FR-A1- 2 808 783
- US-A1- 2004 144 803

## Description

La présente invention concerne un dispositif de distribution de produit cosmétique sous forme aérosol, selon le préambule de la revendication 1.

L'invention concerne également un ensemble de conditionnement de produit cosmétique comprenant un tel dispositif de distribution, et un procédé de fabrication de cet ensemble de conditionnement.

Le produit cosmétique est par exemple un parfum, une eau de toilette, un déodorant, ou un produit coiffant. Plus généralement, le produit cosmétique est un produit tel que défini dans le Règlement CE N° 1223/2009 du Parlement européen et du Conseil daté du 30 novembre 2009, relatif aux produits cosmétiques.

Des ensembles de conditionnement comprenant des dispositifs de distribution du type précité sont connus, notamment de FR-A-2 925 032. Ces ensembles contiennent un produit cosmétique sous pression, généralement sous forme liquide, dans un réservoir fermé par le dispositif de distribution. Le produit cosmétique est normalement retenu dans le réservoir par le dispositif de distribution. Toutefois, lorsque la tige d'actionnement est déplacée en position de libération, le produit cosmétique sort spontanément du réservoir par le conduit de distribution sous l'effet de la pression régnant à l'intérieur du réservoir. Le plus souvent, un diffuseur couplé à l'orifice de sortie divise le produit cosmétique sortant du réservoir en petites gouttelettes qui, projetées dans l'air, forment un aérosol.

Une fois vides, ces ensembles de conditionnement peuvent être à nouveau remplis en injectant un nouveau produit dans le réservoir par l'intermédiaire du dispositif de distribution. À cet effet, il suffit de déplacer la tige d'actionnement en position de libération, puis d'injecter le nouveau produit sous pression dans l'orifice de sortie.

Des individus peu scrupuleux profitent de cette possibilité de réutiliser des ensembles de conditionnement vides pour remplir des ensembles de conditionnement usagés de marques prestigieuses avec des produits de moindre qualité, puis vendre ces articles en les présentant comme des originaux. Cette fraude, outre le manque à gagner qu'elle occasionne pour les marques concernées, porte préjudice à l'image de ces marques.

US 2004/144803 décrit un dispositif du type précité. FR 2 808 783 décrit un autre dispositif de distribution.

Un but de l'invention est d'empêcher cette fraude en limitant le réemploi d'ensembles de conditionnement vides.

À cet effet, l'invention a pour objet un dispositif de distribution selon la revendication 1.

Selon des modes de réalisation particuliers de l'invention, le dispositif de distribution présente également l'une ou plusieurs des caractéristiques des revendications 2 à 8, prise(s) isolément ou suivant toute(s) combinaison(s) techniquement possible(s).

L'invention a en outre pour objet un ensemble de conditionnement de produit cosmétique selon la revendication 9.

L'invention a également pour objet un procédé de fabrication selon la revendication 10.

Selon des modes de réalisation particuliers de l'invention, le procédé présente également l'une ou plusieurs des caractéristiques des revendications 11 à 12, prise(s) isolément ou suivant toute(s) combinaison(s) techniquement possible(s).

D'autres caractéristiques et avantages de l'invention apparaîtront à la lecture de la description qui va suivre, donnée uniquement à titre d'exemple et faite en se référant aux dessins annexés, dans lesquels :
- la figure 1 est une vue en coupe d'un premier ensemble de conditionnement selon l'invention lors de la phase de remplissage de l'ensemble de conditionnement ;
- la figure 2 est une vue en coupe de l'ensemble de conditionnement de la figure 1, lors de la phase d'utilisation de l'ensemble de conditionnement ;
- la figure 3 est une vue en coupe de l'ensemble de conditionnement de la figure 1, lors d'une phase de tentative de remplissage de l'ensemble de conditionnement après utilisation du produit ;
- la figure 4 est un détail de la figure 2 illustrant un organe anti-retour de l'ensemble de conditionnement, déformé dans une position ouverte autorisant le passage de produit ;
- la figure 5 est un détail de la figure 2 illustrant l'organe anti-retour en position fermée empêchant le passage de produit ;
- la figure 6 est une vue en coupe d'un deuxième ensemble de conditionnement selon l'invention, lorsque l'organe anti-retour est en position ouverte ;
- la figure 7 est une vue en coupe du deuxième ensemble de conditionnement selon l'invention, lorsque l'organe anti-retour est en position fermée ; et
- la figure 8 est une vue en coupe d'un troisième ensemble de conditionnement selon l'invention, lorsque l'organe anti-retour est en position ouverte ;
- la figure 9 est une vue en coupe du troisième ensemble de conditionnement selon l'invention, lorsque l'organe anti-retour est en position fermée.

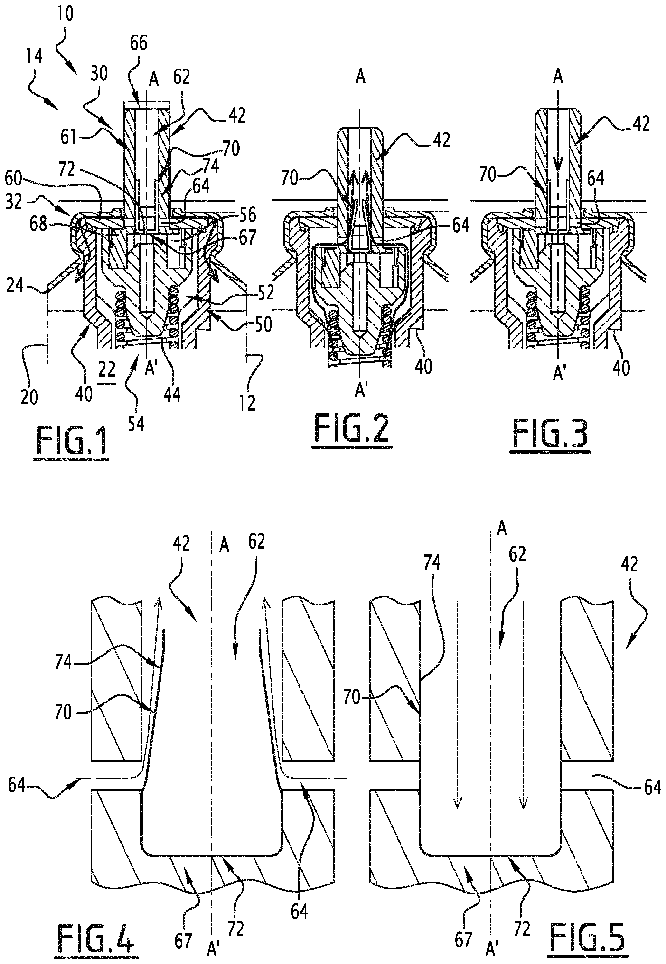

L'ensemble de conditionnement 10 de la figure 1 comprend un réservoir 12 et un dispositif de distribution 14 fermant le réservoir 12.

Le réservoir 12 comprend, de façon connue, une paroi 20 définissant une cavité interne 22 de réception d'un produit cosmétique. La cavité interne 22 débouche à l'extérieur du réservoir 12 par un col 24 ménagé à l'extrémité de la paroi 20.

La cavité interne 22 contient un produit cosmétique (non représenté) tel que défini dans le Règlement CE N° 1223/2009 du Parlement européen et du Conseil daté du 30 novembre 2009, par exemple une eau de toilette, un parfum, un déodorant, ou un produit coiffant.

Le dispositif de distribution 14 est disposé en travers du col 24 de façon à obturer intégralement le col 24. Il est fixé, à sa périphérie, au rebord du col 24.

Le dispositif de distribution 14 comprend une valve de distribution 30 et une coupelle 32.

La coupelle 32 définit un passage central pour le produit cosmétique. La valve 30 est engagée dans le passage central et est liée à la coupelle 32 de façon à empêcher le passage d'un fluide au travers du passage central entre la valve 30 et la coupelle 32 lorsque la pression de ce fluide est inférieure ou égale à la pression régnant dans la cavité 22.

La coupelle 32 assure la liaison de la valve 30 au récipient 12. À cet effet, la coupelle 32 est sertie, à sa périphérie, au rebord du col 24.

La valve 30 comprend un corps de valve 40, une tige d'actionnement 42, et un organe de rappel 44.

Le corps de valve 40 est disposé intégralement d'un même côté de la coupelle 32. En particulier, le corps de valve 40 est intégralement disposé du côté de la coupelle 32 orienté vers la cavité 22.

Le corps de valve 40 est lié rigidement à la coupelle 32. À cet effet, la coupelle 32 est par exemple sertie sur le corps de valve 40.

Le corps de valve 40 comprend une portion cylindrique 50 définissant une chambre intérieure 52 débouchant vers l'intérieur du réservoir 12 par une ouverture 54 d'entrée du produit cosmétique et vers l'extérieur une ouverture 56 de passage de la tige 42. Les ouvertures 54, 56 sont formées à des extrémités axiales opposées de la portion cylindrique 50. On notera que le terme « cylindrique » est utilisé ici et dans le reste de la demande dans son acception la plus large, et englobe aussi bien les cylindres de révolution que les cylindres à section polygonale.

Le corps de valve 40 comprend en outre un joint 60 entourant l'orifice de sortie 56. Ledit joint 60 est disposé en appui contre la coupelle 32 et assure l'étanchéité entre le corps de valve 40 et la coupelle 32.

La tige d'actionnement 42 est sensiblement coaxiale à la portion cylindrique 50. Elle s'étend au travers du passage 34 et de l'ouverture 56. Elle s'étend ainsi en partie dans la chambre 52 et en partie à l'extérieur de la chambre 52. Le joint 60 est en contact avec une face latérale 61 de la tige 42 de façon à réaliser une étanchéité entre la tige 42 et le corps de valve 40.

La tige d'actionnement 42 définit un conduit axial 62, intérieur à la tige 52, de distribution du produit cosmétique. Ce conduit 62 débouche à l'extérieur de la tige 52 par au moins un orifice 64 d'entrée du produit cosmétique (visible sur la figure 4) et par un orifice 66 de sortie du produit cosmétique. L'orifice d'entrée 64 est ménagé radialement dans la face latérale 61. L'orifice de sortie 66 est ménagé dans une extrémité axiale de la tige 42 située hors de la chambre 52. L'extrémité axiale inférieure de la tige 42 définit ainsi un fond 67.

De préférence, comme illustré par la figure 4, la tige 42 comporte deux orifices d'entrée 64. Les deux orifices d'entrée 64 sont avantageusement diamétralement opposés.

La tige d'actionnement 42 est montée mobile dans la chambre 52 le long de son axe A-A' entre une position de blocage du produit cosmétique, représentée sur les figures 1 et 3, dans laquelle l'orifice d'entrée 64 n'est pas en communication fluidique avec la chambre 52, et une position de libération du produit cosmétique, représentée sur la figure 2, dans laquelle l'orifice d'entrée 64 est en communication fluidique avec la chambre 52. En particulier, en position de blocage, l'orifice d'entrée 64 est positionné face au joint 60 et, en position de libération, l'orifice d'entrée 64 est positionné dans la chambre 52.

La tige d'actionnement 42 porte une butée 68 pour stopper la tige d'actionnement 42 lorsqu'elle arrive en position de blocage. Cette butée 68 est également adaptée pour empêcher la tige d'actionnement 42 de sortir intégralement de la chambre 52. À cet effet, la butée 68 est, dans l'exemple représenté, adaptée pour être en contact avec le joint 60 lorsque la tige 42 est en position de blocage. La butée 68 est ainsi, dans l'exemple représenté, constituée par un épaulement, orienté vers le joint 60, de la tige 42.

L'organe de rappel 44 est adapté pour solliciter la tige 42 vers sa position de blocage. La position de blocage constitue ainsi une position de repos de la tige 42.

L'organe de rappel 44 est en particulier disposé dans la chambre 52. Dans l'exemple représenté, cet organe de rappel 44 est un ressort de compression interposé entre l'extrémité axiale de la tige 42 positionnée dans la chambre 52 et l'extrémité axiale de la portion cylindrique 50 dans laquelle est ménagée l'ouverture d'entrée 54.

Selon l'invention, le dispositif de distribution 14 comprend également un organe anti-retour 70, disposé à l'intérieur de la tige d'actionnement 42, pour empêcher la circulation d'un fluide dans le conduit 62 depuis l'orifice de sortie 66 vers l'orifice d'entrée 64.

L'organe anti-retour 70 comprend ici une base 72 fixée sur le fond 67 de la tige 42 et une partie déformable 74.

L'organe anti-retour 70 est réalisé en matière souple. Avantageusement, l'organe anti-retour 70 est réalisé d'un seul tenant en étant venu de matière, par exemple en élastomère.

La partie 74 est déformable entre une position fermée d'obturation de chaque orifice d'entrée 64, appliquée contre la face latérale 61 de la tige 42, et une position, ouverte de libération de chaque orifice d'entrée 64, éloignée de la face latérale 61

Lorsque la partie déformable 74 est en position fermée, comme cela est visible sur les figures 3 et 5, la partie déformable 74 bouche chaque orifice d'entrée 64. Ainsi, la circulation de fluide dans le conduit 62 depuis l'orifice de sortie 66 vers l'orifice d'entrée 64 est empêchée.

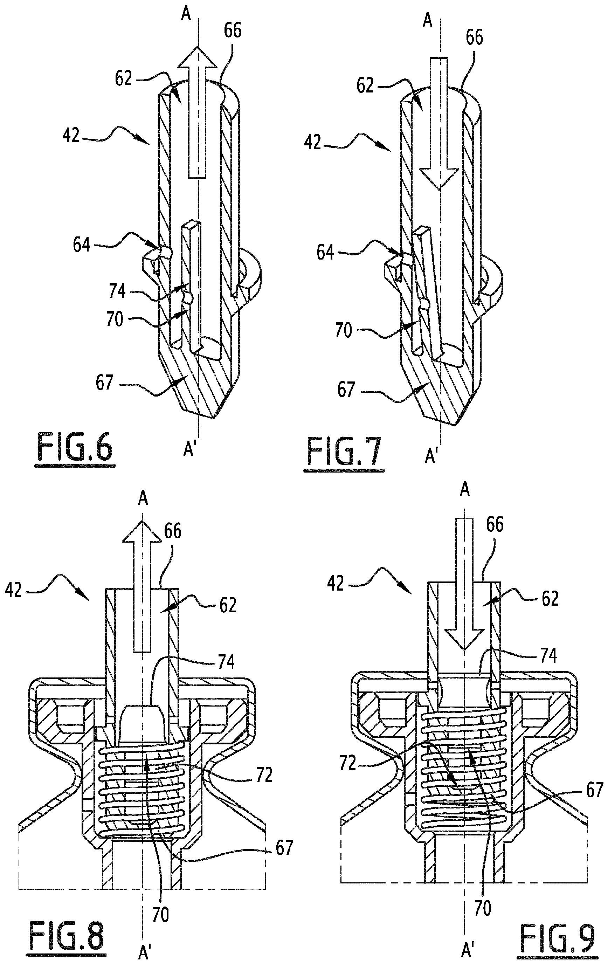

Lorsque la partie mobile 74 est en position ouverte, comme cela est visible sur les figures 4 et 6, la partie mobile 74 ne bouche plus les orifices d'entrée 64. Ainsi, la circulation de fluide entre l'orifice d'entrée 64 et l'orifice de sortie 66 est possible.

Dans cet exemple, la position fermée constitue une position vers laquelle la partie déformable 74 de l'organe anti-retour 70 est sollicitée en permanence. Ainsi, lorsque la partie mobile 74 est en position ouverte, la partie mobile 74 est sollicitée vers la position fermée.

Avantageusement, l'organe anti-retour 70 est monté pré-contraint dans le conduit 62 de la tige 42 pour être sollicité en permanence contre la face latérale 61, y compris dans la position fermée.

En référence à la figure 1, un procédé de fabrication de l'ensemble de conditionnement 10 selon le premier mode de réalisation va maintenant être décrit.

On fournit tout d'abord le réservoir 12 et le dispositif de distribution 14. L'organe anti-retour 70 est déjà inséré dans le conduit 62 de la tige 42.

Le réservoir 12 et le dispositif de distribution 14 sont ensuite assemblés l'un à l'autre, de façon à ce que le dispositif de distribution 14 ferme le réservoir 12.

Le réservoir 12 est alors rempli avec le produit cosmétique. À cet effet, le produit cosmétique est injecté, sous pression, entre la coupelle 32 et le joint 60, comme représenté par les flèches sur la figure 1. Le produit cosmétique se retrouve ainsi libéré dans la cavité 22.

Puis, la coupelle 32 est sertie au rebord 26 entourant la bouche 24 par laquelle la cavité 22 débouche à l'extérieur du réservoir 20.

L'utilisation de l'ensemble de conditionnement 10 va maintenant être décrite, en référence aux figures 2 et 3.

En utilisation normale, telle que représentée sur la figure 2, un utilisateur actionne l'ensemble de conditionnement 10 de façon à provoquer le déplacement de la tige 42 vers la position de libération. Lorsque la tige 42 est en position de libération, le produit cosmétique, sous l'effet de la pression régnant dans le réservoir 12, pénètre dans le conduit 62 par l'orifice d'entrée 64.

Ce produit, qui est à la pression du réservoir 12, exerce une force sur la partie déformable 74 de l'organe anti-retour 70, et pousse ainsi la partie déformable 74 vers l'axe A-A'. Ceci provoque la déformation de la partie déformable 74 depuis la position fermée vers la position ouverte, tel que cela est représenté sur la figure 4.

Le produit cosmétique circule alors dans le conduit 62 jusqu'à l'orifice de sortie 66 en contournant l'organe anti-retour 70. Le produit cosmétique est ainsi distribué normalement, comme cela est représenté par les flèches sur la figure 2.

En cas de tentative de remplissage frauduleuse du réservoir 12, telle que représentée sur la figure 3, un utilisateur injecte un produit sous pression dans le conduit 62 via l'orifice de sortie 66, comme cela est représenté par la flèche sur la figure 3.

Ce produit appuie sur la partie déformable 74 de l'organe anti-retour 70 et plaque ou maintient plaquée la partie déformable 74 contre la face latérale 61, de sorte que la partie déformable 74 est maintenue en position fermée, comme représenté sur la figure 5.

Dans cette position, la partie déformable 74 obture intégralement l'orifice d'entrée 64. Ainsi, le produit injecté ne peut pas pénétrer dans le réservoir 12, et le remplissage du réservoir 12 est empêché.

Dans un deuxième mode de réalisation selon l'invention représenté sur les figures 6 et 7, l'organe anti-retour 70 est venu de matière avec la tige 42. L'organe anti-retour 70 ne comporte alors pas de base.

Dans ce mode de réalisation, la position ouverte est une position de repos de la partie déformable 74. Ainsi, à la différence du premier mode de réalisation, lorsque la partie déformable 74 est en position fermée, elle est sollicitée vers la position ouverte.

À la différence du premier mode de réalisation également, la tige 42 comprend un unique orifice d'entrée 64. La partie déformable 74 est apte, en position fermée, à se placer en regard de l'orifice d'entrée 64, et à se plaquer contre la surface périphérique interne de la tige 42 au-dessus de l'orifice d'entrée 64, par flexion de sorte à empêcher une circulation de produit entre l'orifice d'entrée 64 et l'orifice de sortie 66.

La partie déformable 74 de l'organe anti-retour 70 selon ce mode de réalisation a une forme biseautée. Ainsi, lorsque la partie déformable 74 est en position ouverte, une injection de fluide depuis l'orifice de sortie 66 est apte à exercer une force sur la partie déformable 74, de sorte que la partie déformable 74 est se déforme par flexion vers la position fermée.

Avantageusement, la surface interne de la tige 42 définit un méplat sur lequel s'applique l'extrémité libre de la partie déformable 74 dans la position rapprochée.

Dans un troisième mode de réalisation représenté sur la figure 8, l'organe anti-retour comprend une base fixe 72 de forme cylindrique insérée en force dans le fond 67 de la tige 42.

La partie déformable 74 fait saillie à partir de la base 72. Elle présente une forme de membrane annulaire creuse définissant un passage central débouchant axialement vers l'extérieur de la tige 42.

Au repos, la partie déformable 74 est en position ouverte. Le bord libre de la partie déformable 74 converge vers l'axe A-A'.

Lors d'une injection de produit dans le conduit 62 via l'orifice de sortie 66, le produit gonfle la partie déformable 74 qui se déforme radialement depuis son arc pour passer dans sa position fermée. Le bord libre de la partie déformable 74 s'éloigne alors de l'axe A-A' et se plaque contre la surface périphérique interne de la tige 42 au-dessus de chaque orifice d'entrée 64.

Le passage de produit depuis l'extérieur vers le réservoir 22 à travers l'orifice 64 est donc empêché.

Dans une variante du procédé de fabrication, le produit cosmétique est injecté dans le réservoir 22 à travers la tige 42, avant la fixation de l'organe anti-retour 70 dans la tige 42.

Grâce à l'invention décrite ci-dessus, le réemploi d'ensembles de conditionnement vides est limité. En effet, ce réemploi n'est plus possible qu'en mettant en oeuvre des pressions de remplissage très élevées qui ne sont pas accessibles aux fraudeurs.

En outre, l'organe anti-retour 70 utilisé est très discret, de sorte que l'objectif ci-dessus est atteint sans augmentation de l'encombrement de l'ensemble de conditionnement.

## Revendications

1. Dispositif de distribution (14) d'un produit sous forme aérosol, comprenant une valve de distribution (30) comportant :
- un corps de valve (40), définissant une chambre intérieure (52) au corps de valve (40), débouchant à l'extérieur du corps de valve (40) par une ouverture d'entrée (54) du produit et par une ouverture de passage (56),
- une tige d'actionnement (42), définissant un conduit de distribution du produit (62), intérieur à la tige (42), le conduit (62) débouchant à l'extérieur de la tige (42) par au moins un orifice d'entrée (64) du produit et par un orifice de sortie (66) du produit, la tige d'actionnement (42) étant montée mobile dans la chambre (52) du corps de valve (40) entre une position de libération du produit, dans laquelle l'orifice d'entrée (64) est en communication fluidique avec la chambre (52) et l'orifice de sortie (66) est hors de la chambre (52), et une position de blocage du produit, dans laquelle l'orifice d'entrée (64) n'est pas en communication fluidique avec la chambre (52), et
- un organe de rappel (44) de la tige d'actionnement (42) vers sa position de blocage,
le dispositif de distribution (14) comprenant un organe anti-retour (70), **caractérisé en ce que** l'organe anti-retour (70) est disposé à l'intérieur de la tige d'actionnement (42), l'organe anti-retour (70) comprenant une partie (74) déformable entre une position fermée, appliquée contre une face latérale (61) de la tige d'actionnement (42), dans laquelle la circulation de fluide dans le conduit (62) depuis l'orifice de sortie (66) à travers l'orifice d'entrée (64) est rendue impossible, et une position ouverte, éloignée de la face latérale (61) de la tige d'actionnement (42), dans laquelle la circulation de fluide à travers l'orifice d'entrée (64) vers l'orifice de sortie (66) est possible.

2. Dispositif de distribution (14) selon la revendication 1, dans lequel la position fermée constitue une position de repos, la partie déformable (74) dans sa position ouverte étant sollicitée vers sa position fermée.

3. Dispositif de distribution (14) selon la revendication 1, dans lequel la position ouverte constitue la position de repos, la partie déformable (74) dans sa position fermée étant sollicitée vers sa position ouverte.

4. Dispositif de distribution (14) selon la revendication 1 ou 2, dans lequel la tige d'actionnement (42) comprend deux orifices d'entrée (64) diamétralement opposés, la partie déformable (74) couvrant les deux orifices d'entrée (64) dans sa position fermée.

5. Dispositif de distribution (14) selon l'une quelconque des revendications précédentes, dans lequel l'organe anti-retour (70) comprend une base (72) fixée sur un fond (67) de la tige (42).

6. Dispositif de distribution (14) selon la revendication 5, dans lequel la base (72) est montée en force dans le fond (67) de la tige (42).

7. Dispositif de distribution (14) selon l'une quelconque des revendications précédentes, dans lequel l'organe anti-retour (70) est venu de matière avec la tige (42).

8. Dispositif de distribution (14) selon l'une quelconque des revendications 1 à 6, dans lequel la partie déformable (74) est une membrane avantageusement en élastomère.

9. Ensemble de conditionnement (10) d'un produit, comprenant un réservoir (22) contenant un produit et un dispositif de distribution (14) selon l'une quelconque des revendications précédentes fermant ledit réservoir (22).

10. Procédé de fabrication d'un ensemble de conditionnement (10) selon la revendication 9, comprenant les étapes successives suivantes :
- fourniture du réservoir (22) et du dispositif de distribution (14),
- remplissage du réservoir (22);
- fermeture irréversible du réservoir (22) avec le dispositif de distribution (14) l'organe anti-retour (70) étant disposé dans le conduit de distribution.

11. Procédé selon la revendication 10, dans lequel l'organe anti-retour (70) est disposé dans le conduit de distribution (62) avant le remplissage du réservoir (22), le remplissage du réservoir (22) s'effectuant autour du dispositif de distribution (14), sans déplacement de la tige d'actionnement (42) en position de libération.

12. Procédé selon la revendication 10, dans lequel l'organe anti-retour (70) est disposé dans le conduit de distribution (62) après le remplissage du réservoir (22).

## Patentansprüche

1. Vorrichtung (14) zum Ausgeben eines Produkts in Form eines Aerosols, ein Ausgabeventil (30) umfassend, das aufweist:
- einen Ventilkörper (40), der eine im Ventilkörper (40) vorgesehene Innenkammer (52) begrenzt, die in Bezug auf den Ventilkörper (40) nach außen über eine Eintrittsöffnung (54) des Produkts und eine Durchgangsöffnung (56) mündet,
- einen Bestätigungsstab (42), der einen Ausgabekanal (62) des Produkts innerhalb des Stabs (42) begrenzt, wobei der Kanal (62) über mindestens eine Eintrittsöffnung (64) des Produkts und über eine Austrittsöffnung (66) des Produkts in Bezug auf den Stab (42) nach außen mündet, wobei der Betätigungsstab (42) in der Kammer (52) des Ventilkörpers (40) zwischen einer Position des Freisetzens des Produkts, in der die Eintrittsöffnung (64) in Fluidverbindung mit der Kammer (52) ist und die Austrittsöffnung (66) außerhalb der Kammer (52) ist, und einer Position des Absperrens des Produkts, in der die Eintrittsöffnung (64) nicht in Fluidverbindung mit der Kammer (52) ist, beweglich angeordnet ist, und
- ein Element (44) zum Rückstellen des Betätigungsstabs (42) in die Absperrposition,
wobei die Ausgabevorrichtung (14) ein Rückschlagelement (70) umfasst, **dadurch gekennzeichnet, dass** das Rückschlagelement (70) im Inneren des Betätigungsstabs (42) angeordnet ist und ein Teil (74) umfasst, das zwischen einer Schließstellung, in der es gegen die Seitenwand (61) des Betätigungsstabs (42) gedrückt wird und die Zirkulation des Fluids in dem Kanal (62) von der Austrittsöffnung (33) durch die Eintrittsöffnung (64) hindurch unmöglich gemacht wird, und einer Offenstellung, in der es von der Seitenfläche (61) des Betätigungsstabs (42) entfernt ist und die Zirkulation des Fluids durch die Eintrittsöffnung (64) zu der Austrittsöffnung (66) möglich ist, verformbar ist.

2. Ausgabevorrichtung (14) nach Anspruch 1, in der die Schließstellung eine Ruheposition darstellt, wobei das verformbare Teil (74) in seiner Offenstellung zu seiner Schließstellung vorgespannt ist.

3. Ausgabevorrichtung (14) nach Anspruch 1, in der die Offenstellung die Ruheposition bildet, wobei das verformbare Teil (74) in seiner Schließstellung zu seiner Offenstellung vorgespannt ist.

4. Ausgabevorrichtung (14) nach Anspruch 1 oder 2, bei der der Betätigungsstab (42) zwei Eintrittsöffnungen (64) diametral entgegengesetzt umfasst, wobei das verformbare Teil (74) die zwei Eintrittsöffnungen (64) in seiner Schließstellung bedeckt.

5. Ausgabevorrichtung (14) nach einem beliebigen der vorhergehenden Ansprüche, bei der das Rückschlagelement (70) einen Sockel (72) umfasst, der an einem Boden (67) des Stabs (42) befestigt ist.

6. Ausgabevorrichtung (14) nach Anspruch 5, bei der der Sockel (72) mit Kraftaufwendung in den Boden (67) des Stabs (42) montiert ist.

7. Ausgabevorrichtung (14) nach einem beliebigen der vorhergehenden Ansprüche, bei der das Rückschlagelement (70) einstückig mit dem Stab (42) ausgebildet ist.

8. Ausgabevorrichtung (14) nach einem beliebigen der Ansprüche 1 bis 6, bei der das verformbare Teil (74) eine Membran ist, die vorteilhafterweise aus einem Elastomer besteht.

9. Verpackungsanordnung (10) für ein Produkt, einen ein Produkt enthaltenden Behälter (22) und eine Ausgabevorrichtung (40) nach einem beliebigen der vorhergehenden Ansprüche, die den Behälter (22) verschließt, umfassend.

10. Verfahren zum Herstellen einer Verpackungsanordnung (10) nach Anspruch 9, die folgenden aufeinanderfolgenden Schritte umfassend:
- Bereitstellen eines Behälters (22) und der Ausgabevorrichtung (14),
- Füllen des Behälters (22);
- irreversibles Verschließen des Behälters (22) mit der Ausgabevorrichtung (14), wobei das Rückschlagelement (70) in dem Ausgabekanal angeordnet wird.

11. Verfahren nach Anspruch 10, bei dem das Rückschlagelement (70) vor dem Füllen des Behälters (22) in dem Ausgabekanal (62) angeordnet wird, wobei das Füllen des Behälters (22) um die Ausgabevorrichtung (14) herum ohne Verschiebung des Betätigungsstabs (42) in die Freisetzungsposition ausgeführt wird.

12. Verfahren nach Anspruch 10, bei dem das Rückschlagelement (70) nach dem Füllen des Behälters (22) in dem Ausgabekanal (62) angeordnet ist.

## Claims

1. A device for dispensing (14) a product as a spray, comprising a dispensing valve (30) comprising:
- a valve body (40), defining a chamber interior (52) to the valve body (40), opening onto the outside of the valve body (40) by a product inlet opening (54) and by a passage opening (56),
- an actuating rod (42), defining a product dispensing duct (62), inside the rod (42), the duct (62) opening onto the outside of the rod (42) via at least one product inlet orifice (64) and via a product outlet orifice (66), the actuating rod (42) being mounted mobile in the chamber (52) of the valve body (40) between a product releasing position, wherein the inlet orifice (64) is in fluidic communication with the chamber (52) and the outlet orifice (66) is outside of the chamber (52), and a product blocking position, wherein the inlet orifice (64) is not in fluidic communication with the chamber (52), and
- a return element (44) of the actuating rod (42) to its blocking position,
the dispensing device (14) comprising a non-return valve (70) **characterized in that** the non-return valve (70) is arranged inside the actuating rod (42), the non-return valve (70) comprising a deformable portion (74) between a closed position, applied against a lateral face (61) of the actuating rod (42), in which the circulation of fluid in the duct (62) from the outlet orifice (66) through the inlet orifice (64) is rendered impossible, and an open position, separated from the lateral face (61) of the actuating rod (42), in which the circulation of fluid through the inlet orifice (64) to the outlet orifice (66) is possible.

2. The dispensing device (14) according to claim 1, wherein the closed position forms an idle position, the deformable portion (74) in its open position being urged toward its closed position.

3. The dispensing device (14) according to claim 1, wherein the open position forms an idle position, the deformable portion (74) in its closed position being urged toward its open position.

4. The dispensing device (14) according to claim 1 or 2, wherein the actuating rod (42) comprises two diametrically opposite inlet orifice (64), the deformable portion (74) covering the two inlet orifice (64) in its closed position.

5. The dispensing device (14) according to any of the preceding claims, wherein the non-return valve (70) comprises a base (72) fixed on a bottom (67) of the rod (42).

6. The dispensing device (14) according to claim 5, wherein the base (72) is swaged in the bottom (67) of the rod (42).

7. The dispensing device (14) according to any of the preceding claims, wherein the non-return valve (70) is in one piece with the rod (42).

8. The dispensing device (14) according to any of claims 1 to 6, wherein the deformable portion (74) is a membrane advantageously made of elastomer.

9. An assembly for packaging (10) a product, comprising a reservoir (22) containing a product and a dispensing device (14) according to any of the preceding claims closing said reservoir (22).

10. A method for manufacturing the assembly for packaging (10) according to claim 9, comprising the following successive steps:
- supplying of the reservoir (22) and of the dispensing device (14),
- filling of the reservoir (22);
- irreversible closing of the reservoir (22) with the dispensing device (14) the non-return valve (70) being arranged in the dispensing duct.

11. The method according to claim 10, in which the non-return valve (70) is arranged in the dispensing duct (62) before the filling of the reservoir (22), the filling of the reservoir (22) being carried out around the dispensing device (14), without displacement of the actuating rod (42) in releasing position.

12. The method according to claim 10, in which the non-return valve (70) is arranged in the dispensing duct (62) after the filling of the reservoir (22).
